# FASCICULE DE BREVET EUROPEEN

(11) **EP 1 064 752 B1**
(45) Date de publication et mention de la délivrance du brevet: **20.08.2003**
(21) Numéro de dépôt: 99909029.3
(22) Date de dépôt: 17.03.1999
(51) Int. Cl.: H04L 9/06, H04L 9/30

(54) **PROCEDE DE SECURISATION DE DONNEES METTANT EN OEUVRE UN ALGORITHME CRYPTOGRAPHIQUE**
VERFAHREN ZUR DATENSICHERUNG WELCHES EINEN KRYPTO-ALGORITHMUS VERWENDET
METHOD FOR DATA SECUREMENT USING A CRYPTOGRAPHIC ALGORITHM

(30) Priorité: 17.03.1998 FR 9803242
(43) Date de publication de la demande: 03.01.2001
(73) Titulaire: SCHLUMBERGER Systèmes, 92120 Montrouge (FR)
(72) Inventeur: SALLE, Patrick, F-91370 Verrières-le-Buisson (FR)
(86) Numéro de dépôt international: FR9900613
(87) Numéro de publication internationale: WO99048239

(56) Documents cités:
- KOCHER P C: "Timing attacks on implementations of Diffie-Hellman, RSA, DSS, and other systems" ADVANCES IN CRYPTOLOGY - CRYPTO'96. 16TH ANNUAL INTERNATIONAL CRYPTOLOGY CONFERENCE. PROCEEDINGS, SANTA BARBARA, CA, USA, 18-22 AUG. 1996, pages 104-113, XP000626590 ISBN 3-540-61512-1, 1996, Berlin, Germany, Springer-Verlag, Germany

## Description

La présente invention concerne un procédé de sécurisation de données, destiné par exemple à être mis en oeuvre par le microprocesseur d'une carte bancaire ou une carte d'autorisation d'accès lors d'une connexion à un terminal informatique d'authentification.

Les procédés de sécurisation de données de type connu mettent en oeuvre un algorithme cryptographique comprenant des cycles d'exécution d'opérations répétitives de traitement d'éléments de données contenus dans une mémoire de la carte pour élaborer une information chiffrée destinée à être communiquée au terminal informatique.

Le document D1, "Timing attacks on implementations of Diffie-Hellman, RSA, DSS and other systems" de Paul C. Kocher, publié le 18/08/1996 considère le problème de sécurisation de données dans une carte à puce. Dans le document sont présentées différentes techniques pour prévenir des attaques: en particulier pour les algorithmes RSA et Diffie-Hellmann une signature est calculée avant l'exécution d'une opération de exponentiation modulaire.

L'exécution du procédé par le microprocesseur de la carte engendre l'émission de signaux dérivés tels que des pics de consommation au niveau de l'alimentation électrique du microprocesseur, ou des variations du rayonnement électromagnétique de sorte que l'enveloppe du rayonnement électromagnétique est significative des données traitées. Un fraudeur désirant utiliser de façon non autorisée les cartes à microprocesseur peut lancer à plusieurs reprises l'exécution du procédé et analyser les signaux dérivés émis pour établir des correspondances entre les différentes opérations de traitement et chaque signal ou série de signaux. A partir de ces correspondances, et en soumettant par exemple la carte à des perturbations électromagnétiques ou des baisses de tension à des instants précis du déroulement de l'algorithme, le fraudeur peut étudier l'information chiffrée obtenue et les différences, ou au contraire l'absence de différences, entre les signaux dérivés émis pour découvrir les données contenues dans la mémoire de la carte.

Pour compliquer une telle analyse des signaux dérivés, on a pensé à engendrer des signaux parasites venant s'ajouter aux signaux dérivés émis lors de l'exécution du procédé. L'extraction des signaux correspondant à l'exécution du procédé est alors plus délicate mais demeure possible. On a également pensé à concevoir les composants électroniques de la carte et le programme d'exécution du procédé de sorte que les signaux dérivés émis soient indépendants de la valeur des données sensibles. Toutefois, ceci complique la réalisation des cartes sans assurer une protection satisfaisante des données.

Un but de l'invention est de proposer un procédé de sécurisation efficace ne présentant pas les inconvénients précités.

En vue de la réalisation de ce but, on prévoit, selon l'invention, un procédé de sécurisation de données mettant en oeuvre un algorithme cryptoeraphique d'exécution d'opérations de traitement d'éléments de données pour élaborer une information chiffrée, ce procédé comprenant au moins une étape de transformation aléatoire de l'exécution d'au moins une opération d'un cycle à un autre ou de transformation aléatoire d'au moins un des éléments de données de telle sorte que l'information chiffrée soit inchangée par cette transformation aléatoire.

Par transformation aléatoire de l'exécution d'au moins une opération, on entend une modification de l'ordre d'exécution d'opérations ou de parties d'opérations, ou une modification du déroulement d'une seule opération. Ainsi, au moins une opération et/ou au moins une des données traitées sont modifiées aléatoirement, ce qui affecte de façon aléatoire les signaux dérivés émis. Il est de ce fait très difficile pour un fraudeur de distinguer les différentes opérations de traitement et de découvrir les données à partir des signaux dérivés. En outre, la modification aléatoire n'affecte pas l'information chiffrée de sorte que celle-ci peut être utilisée de façon habituelle après son élaboration.

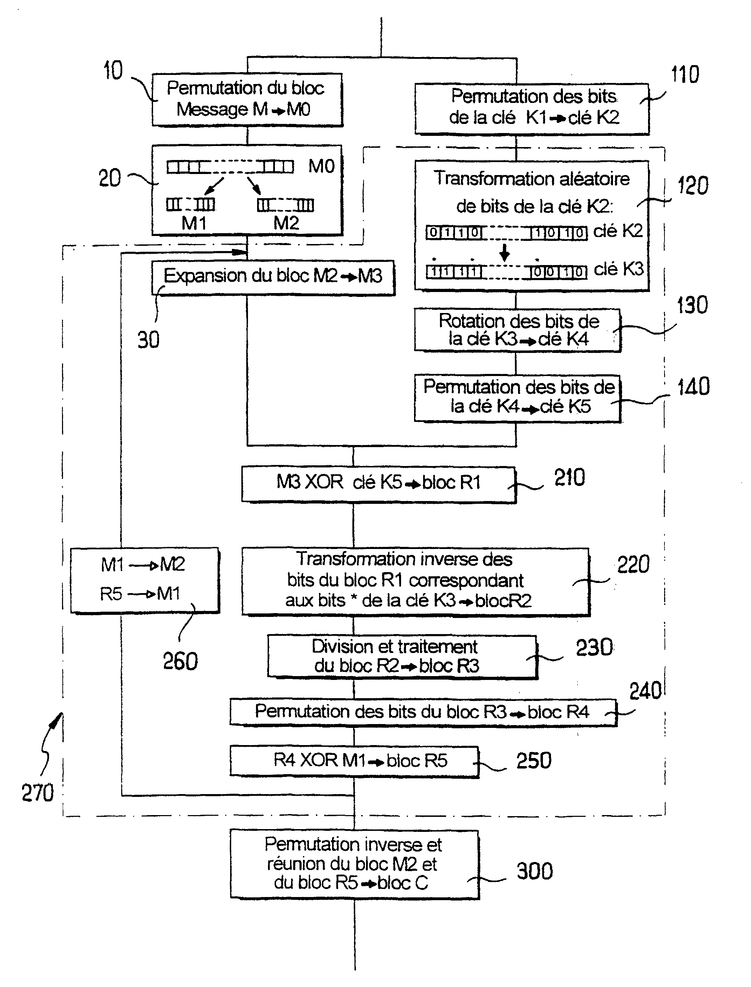

D'autres caractéristiques et avantages de l'invention apparaîtront à la lecture de la description qui suit d'un mode de mise en oeuvre particulier non limitatif de l'invention, en relation avec la figure unique annexée illustrant sous forme d'un schéma par blocs le déroulement du procédé selon ce mode de mise en oeuvre.

Le procédé de sécurisation selon l'invention est ici décrit mettant en oeuvre un algorithme cryptographique symétrique de type DES (abréviation des termes DATA ENCRYPTION STANDARD) en vue d'élaborer une information chiffrée C de 64 bits à partir d'un bloc message M et d'une clé secrète K1 eux-mêmes de 64 bits.

Le procédé débute par la permutation 10 des bits du bloc message M entre eux pour former le bloc M0.

Le bloc M0 est alors divisé en deux blocs M1 et M2 de 32 bits lors d'une étape de division 20.

Il est ensuite procédé à l'expansion 30 du bloc M2 pour former un bloc M3 de 48 bits. Cette expansion 30 est par exemple réalisée en découpant le bloc M2 en huit quartets et en ajoutant à chaque quartet le bit extrême adjacent des quartets encadrant le quartet concerné (les quartets extrêmes étant considérés comme adjacentes).

Parallèlement à ces opérations, une permutation 110 est effectuée sur les bits de la clé K1 pour former la clé K2. Les bits non significatifs de la clé K1 sont simultanément supprimés de sorte que la clé K2 a seulement 56 bits.

Selon l'invention, les bits de la clé K2 sont alors modifiés aléatoirement lors d'une transformation 120. Les bits de la clé K3 correspondant aux bits modifiés de la clé K2, ici marqués par une étoile, sont mémorisés. La transformation aléatoire 120 est par exemple réalisée en associant à la clé K2, par l'intermédiaire d'un opérateur logique de type OU exclusif, un nombre aléatoire engendré par un générateur de nombres non prédictibles de la carte.

Une clé K4 est obtenue par la rotation 130 des bits de la clé K3. Puis, une permutation 140 est réalisée sur les bits de la clé K4 pour former la clé K5. Simultanément à la permutation 140, les bits non significatifs de la clé K4 sont éliminés de sorte que la clé K5 comporte 48 bits.

Le procédé se poursuit par l'association 210 du bloc M3 et de la clé K5 par l'intermédiaire d'un opérateur logique de type OU exclusif. Le résultat de cette association est le bloc R1.

La transformation inverse des bits du bloc R1 correspondant aux bits modifiés par la transformation 120 est ensuite réalisée pour former le bloc R2. Cette transformation 220 inverse de la transformation 120 vise à remettre les bits du bloc R1 correspondant aux bits marqués d'une étoile dans l'état dans lequel ils auraient été en l'absence de la transformation 120.

Il est ensuite procédé, de façon classique, à la division et au traitement 230 du bloc R2, à la permutation 240 des bits du bloc R3 formés lors de l'étape 230, et à l'association 250 du bloc R4 résultat de l'étape 240 au bloc M1 par un opérateur OU exclusif pour former le bloc R5.

Le groupe d'opérations, désigné de manière générale par la référence 270, est ensuite exécuté à nouveau à quinze reprises en affectant, à chacune de celles-ci. la valeur du bloc M1 au bloc M2 et la valeur du bloc R5 au bloc M1 lors d'une étape d'affectation 260.

Le procédé se termine par l'opération 300 d'obtention de l'information chiffrée C par la permutation inverse et la réunion du bloc dernier M2 et du bloc dernier R5 obtenus.

On comprend que l'étape de modification aléatoire de la clé K2 comprend la phase de transformation 120 et la phase de transformation inverse 220. Ces deux phases permettent d'obtenir une information chiffrée C qui n'est pas affectée par cette modification aléatoire.

On pourrait également réaliser de la même manière une modification aléatoire du bloc M2 et/ou d'une autre donnée.

Selon un autre mode de mise en oeuvre de l'invention, lequel peut être associé à une étape de modification telle que précédemment décrite, l'exécution d'au moins une opération peut être modifiée de façon aléatoire d'un cycle à l'autre, un cycle pouvant être un cycle complet d'exécution de l'algorithme ou un cycle intermédiaire d'exécution d'un groupe d'opérations.

Par exemple, une détermination aléatoire de l'ordre d'exécution de certaines opérations peut être réalisée au cours d'un cycle d'exécution de l'algorithme. Les opérations retenues seront celles dont l'ordre d'exécution les unes par rapport aux autres n'influent pas sur le résultat. Pour réaliser cette détermination, on pourra prévoir à la fin des opérations choisies un saut conditionnel vers certaines opérations en fonction de la valeur d'un nombre aléatoire ou définir un tableau des adresses des différentes opérations parcouru de façon aléatoire.

A titre d'exemple, la permutation 10 des bits du bloc message M pourrait être effectuée après la permutation 110 des bits de la clé K1 ou inversement.

De même, il pourrait être prévu une détermination aléatoire de l'ordre d'exécution des opérations du groupe 270 pour chaque cycle intermédiaire d'exécution de celles-ci (16 cycles intermédiaires d'exécution de ces opérations pour un cycle complet d'exécution de l'algorithme). Là encore, l'ordre d'exécution de ces opérations sera choisi pour ne pas influer sur le résultat.

Par ailleurs, pour certaines opérations, les données sont traitées par éléments. Ainsi, lors de l'expansion 30, les blocs M2 sont traités par quartets. Lors de cette opération, on peut prévoir de déterminer aléatoirement l'ordre de traitement des différents quartets. De même, lors de la permutation 140 les bits de la clé K4 sont traités individuellement. Une étape de détermination aléatoire de l'ordre de traitement des bits peut également être prévue pour l'exécution de cette permutation. Les quartets du bloc M2 peuvent également être traités en alternance avec les bits de la clé K4, c'est-à-dire que l'on traite par exemple un premier quartet du bloc M2 puis une série de bits de la clé K4, puis un deuxième quartet du bloc M2 etc., en mémorisant à chaque fois les éléments de donnée traités afin de contrôler que toutes les opérations requises sont bien exécutées.

Bien entendu, l'invention n'est pas limitée au mode de réalisation qui vient d'être décrit, mais englobe au contraire toute variante reprenant, avec des moyens équivalents, ses caractéristiques essentielles.

En particulier, bien que l'invention ait été décrite en relation avec un algorithme de type DES, l'invention peut être appliquée à d'autres algorithmes symétriques qui procèdent par modification de bits. Ainsi, la modification étant effectuée au moyen d'un opérateur logique du type OU EXCLUSIF, la longueur des éléments de données non transformés est identique à la longueur de ces éléments de données transformés.

De plus, les nombres de bits des données ne sont mentionnés qu'à titre indicatif et peuvent être modifiés pour être adaptés au degré de sécurisation envisagé.

On notera par ailleurs que tous les éléments de données M, M0, M1, M2, M3, K1, K2, K3, K4, K5, R1, R2, R3, R4 et R5 peuvent être transformés en leur associant, par l'intermédiaire de l'opérateur logique OU EXCLUSIF, un nombre aléatoire sachant que, postérieurement à cette étape de transformation aléatoire, on procédera à une étape de transformation inverse de sorte que l'information chiffrée C soit inchangée par lesdites transformations.

En particulier, les éléments de données peuvent être des clés K1, K2, K3, K4, K5 ou des blocs de message M, M0, M1, M2, M3 ou des blocs de messages associés à une clé par un opérateur logique du type OU EXCLUSIF R1, R2, R3, R4, R5.

On notera enfin que. si l'étape de transformation aléatoire est une étape préalable au groupe d'opérations exécuté à plusieurs reprises et si l'étape de transformation inverse est une étape postérieure audit groupe d'opérations, il suffit de générer un nombre aléatoire une fois et de traiter le bloc de message M par l'algorithme pour obtenir une information chiffrée, tous les éléments de données du bloc étant modifiés. La chaîne des données est protégée de bout en bout. En outre, en ne multipliant pas les étapes de transformation et le nombre de nombres aléatoires générés, l'algorithme est mis en oeuvre rapidement, ce qui est nécessaire dans le cas d'une carte à puce où la durée de l'exécution d'un algorithme doit être minimale.

## Revendications

1. Procédé de sécurisation de données (M) mettant en oeuvre, dans un microprocesseur d'une carte à puce, un algorithme cryptographique d'exécution d'opérations de traitement d'éléments de données (M, M0, M1, M2, M3, K1, K2, K3, K4, K5, R1, R2, R3, R4, R5) pour élaborer une information chiffrée (C), **caractérisé en ce qu'**il comprend au moins, d'une part, une étape de transformation (120) aléatoire de bits d'au moins un des éléments de données (K2) en associant audit élément de données (K2), par l'intermédiaire d'un opérateur logique du type OU EXCLUSIF, un nombre aléatoire, et, d'autre part, postérieurement à cette étape de transformation aléatoire, une étape de transformation inverse (220), de telle sorte que l'information chiffrée (C) soit inchangée par ces étapes de transformation (120, 220).

2. Procédé de sécurisation selon la revendication 1, **caractérisé en ce qu'**un élément de données transformé de manière aléatoire est une clé (Kl, K2, K3, K4, K5).

3. Procédé de sécurisation selon l'une des revendications 1 ou 2, **caractérisé en ce qu'**un élément de donnés transformé de manière aléatoire est un bloc de message (M, M0, M1, M2, M3).

4. Procédé de sécurisation selon l'une des revendications 1, 2 ou 3, **caractérisé en ce qu'**un élément de données transformé de manière aléatoire est un bloc de message associé à une clé par un opérateur logique du type OU EXCLUSIF (R1, R2, R3, R4, R5).

5. Procédé de sécurisation selon l'une des revendications précédentes, **caractérisé en ce que** l'algorithme cryptographique d'exécution d'opérations de traitement de données (M, M0, M1, M2, M3, K1, K2, K3, K4, K5, R1, R2, R3, R4, R5) comprend un groupe d'opérations (270) exécuté à plusieurs reprises.

6. Procédé de sécurisation selon la revendication 5, **caractérisé en ce que** l'étape de transformation aléatoire est une étape préalable au groupe d'opérations (270) exécuté à plusieurs reprises et **en ce que** l'étape de transformation inverse est une étape postérieure audit groupe d'opérations (270).

7. Procédé de sécurisation selon l'une des revendications précédentes, **caractérisé en ce qu'**il comprend en outre une étape de modification aléatoire de l'ordre d'exécution des opérations du groupe d'opérations (270).

8. Procédé de sécurisation selon l'une des revendications précédentes, **caractérisé en ce que** l'algorithme cryptographique est du type DATA ENCRYPTION STANDARD.

9. Cartes à puce comprenant un microprocesseur programmé pour mettre en oeuvre un algorithme cryptographique d'exécution d'opérations de traitement d'éléments de données (M, M0, M1, M2, M3, K1, K2, K3, K4, K5, R1, R2, R3, R4, R5) pour élaborer une information chiffrée (C), le procédé de sécurisation de données (M) comprenant au moins, d'une part, une étape de transformation (120) aléatoire de bits d'au moins un des éléments de données (K2) en associant audit élément de données (K2), par l'intermédiaire d'un opérateur logique du type OU EXCLUSIF, un nombre aléatoire, et, d'autre part, postérieurement à cette étape de transformation aléatoire, une étape de transformation inverse (220), de telle sorte que l'information chiffrée (C) soit inchangée par ces étapes de transformation (120, 220).

10. Produit de programme d'ordinateur pour un microprocesseur d'une carte à puce, ledit produit de programme d'ordinateur comprenant un jeu d'instructions qui, quand celui-ci est chargé dans le microprocesseur, amène le microprocesseur à exécuter un algorithme cryptographique impliquant des opérations de traitement d'éléments de données (M, M0, M1, M2, M3, K1, K2, K3, K4, K5, R1, R2, R3, R4, R5) pour élaborer une information chiffrée (C), les opérations de traitement d'éléments de données comprenant au moins, d'une part, une étape de transformation (120) aléatoire de bits d'au moins un des éléments de données (K2) en associant audit élément de données (K2), par l'intermédiaire d'un opérateur logique du type OU EXCLUSIF, un nombre aléatoire, et, d'autre part, postérieurement à cette étape de transformation aléatoire, une étape de transformation inverse (220), de telle sorte que l'information chiffrée (C) soit inchangée par ces étapes de transformation (120, 220).

## Patentansprüche

1. Datensicherungsverfahren (M), bei dem in einem Mikroprozessor einer Chipkarte ein kryptographischer Operationsausführungsalgorithmus zur Verarbeitung von Datenelementen (M, M0, M1, M2, M3, K1, K2, K3, K4, K5, R1, R2, R3, R4, R5) zum Einsatz kommt, um eine verschlüsselte Information (C) herzustellen, **dadurch gekennzeichnet, dass** es zum einen mindestens eine zufällige Bit-Umwandlungsphase (120) von mindestens einem der Datenelemente (K2) umfasst, indem dem besagten Datenelement (K2) über einen booleschen Operator vom Typ ausschließendes ODER eine Zufallszahl zugeordnet wird und zum anderen nach dieser zufälligen Umwandlungsphase eine umgekehrte Umwandlungsphase (220) umfasst, so dass die verschlüsselte Information (C) durch diese Umwandlungsphasen (120, 220) nicht verändert wird.

2. Sicherungsverfahren nach Anspruch 1, **dadurch gekennzeichnet, dass** ein auf zufällige Art umgewandeltes Datenelement ein Schlüssel (K1, K2, K3, K4, K5) ist.

3. Sicherungsverfahren nach einem der Ansprüche 1 oder 2, **dadurch gekennzeichnet, dass** ein auf zufällige Art umgewandeltes Datenelement ein Meldungsblock (M, M0, M1, M2, M3) ist.

4. Sicherungsverfahren nach einem der Ansprüche 1, 2 oder 3, **dadurch gekennzeichnet, dass** ein auf zufällige Art umgewandeltes Datenelement ein durch einen booleschen Operator vom Typ ausschließendes ODER (R1, R2, R3, R4, R5) einem Schlüssel zugeordneter Meldungsblock ist.

5. Sicherungsverfahren nach einem der vorausgehenden Ansprüche, **dadurch gekennzeichnet, dass** der kryptographische Operationsausführungsalgorithmus zur Verarbeitung von Daten (M, M0, M1, M2, M3, K1, K2, K3, K4, K5, R1, R2, R3, R4, R5) eine Reihe von Operationen (270) umfasst, die mehrmals ausgeführt wird.

6. Sicherungsverfahren nach Anspruch 5, **dadurch gekennzeichnet, dass** die zufällige Umwandlungsphase eine der mehrmals ausgeführten Reihe von Operationen (270) vorausgehende Phase ist und dass die umgekehrte Umwandlungsphase nach der besagten Reihe von Operationen (270) stattfindet.

7. Sicherungsverfahren nach einem der vorausgehenden Ansprüche, **dadurch gekennzeichnet, dass** es zudem eine Phase der zufälligen Änderung der Ausführungsreihenfolge der Operationen der Operationsreihe (270) umfasst.

8. Sicherungsverfahren nach einem der vorausgehenden Ansprüche, **dadurch gekennzeichnet, dass** der kryptographische Algorithmus vom Typ DATA ENCRYPTION STANDARD ist.

9. Chipkarten mit einem programmierten Mikroprozessor zum Einsatz eines kryptographischen Operationsausführungsalgorithmus zur Verarbeitung von Datenelementen (M, M0, M1, M2, M3, K1, K2, K3, K4, K5, R1, R2, R3, R4, R5), um eine verschlüsselte Information (C) herzustellen, wobei das Datensicherungsverfahren (M) zum einen mindestens eine zufällige Bit-Umwandlungsphase (120) von mindestens einem der Datenelemente (K2) umfasst, indem dem besagten Datenelement (K2) über einen booleschen Operator vom Typ ausschließendes ODER eine Zufallszahl zugeordnet wird und zum anderen nach dieser zufälligen Umwandlungsphase eine umgekehrte Umwandlungsphase (220) umfasst, so dass die verschlüsselte Information (C) durch diese Umwandlungsphasen (120, 220) nicht verändert wird.

10. Computerprogrammprodukt für einen Mikroprozessor einer Chipkarte, wobei dieses eine Reihe von Anleitungen umfasst, die, wenn sie im Mikroprozessor geladen ist, den Mikroprozessor dazu führt, einen kryptographischen Algorithmus auszuführen, bei dem Operationen zur Verarbeitung von Datenelementen (M, M0, M1, M2, M3, K1, K2, K3, K4, K5, R1, R2, R3, R4, R5) durchgeführt werden, um eine verschlüsselte Information (C) herzustellen, wobei die Verarbeitungsoperationen von Datenelementen zum einen mindestens eine zufällige Bit-Umwandlungsphase (120) von mindestens einem der Datenelemente (K2) umfasst, indem dem besagten Datenelement (K2) über einen booleschen Operator vom Typ ausschließendes ODER eine Zufallszahl zugeordnet wird und zum anderen nach dieser zufälligen Umwandlungsphase eine umgekehrte Umwandlungsphase (220) umfasst, so dass die verschlüsselte Information (C) durch diese Umwandlungsphasen (120, 220) nicht verändert wird.

## Claims

1. Method to secure data (M) implementing, in a smartcard microprocessor, a cryptographic algorithm executing operations to process data elements (M, M0, M1, M2, M3, K1, K2, K3, K4, K5, R1, R2, R3, R4, R5) to generate encrypted information (C), **characterised in that** it comprises at least firstly a random bit conversion step (120) to convert at least one of the data elements (K2) associating with said data element (K2), using a logical operator of type EXCLUSIVE OR, a random number and secondly, after this random conversion step, an inverse conversion step (220), such that the encrypted information (C) is unchanged by these conversion steps (120, 220).

2. Method to secure data according to claim 1, **characterised in that** a randomly converted data element is a key (K1, K2, K3, K4, K5).

3. Method to secure data according to claim 1 or 2, **characterised in that** a randomly converted data element is a message block (M, M0, M1, M2, M3).

4. Method to secure data according to claim 1, 2 or 3, **characterised in that** a randomly converted data element is a message block associated with a key by a logical operator of type EXCLUSIVE OR (R1, R2, R3, R4, R5).

5. Method to secure data according to one of the previous claims, **characterised in that** the cryptographic algorithm executing operations to process data (M, M0, M1, M2, M3, K1, K2, K3, K4, K5, R1, R2, R3, R4, R5) comprises a group of operations (270) executed several times.

6. Method to secure data according to claim 5, **characterised in that** the random conversion step is a step carried out prior to the group of operations (270) executed several times and **in that** the inverse conversion step is a step carried out after said group of operations (270).

7. Method to secure data according to one of the previous claims, **characterised in that** it comprises in addition a step to randomly modify the order of execution of the operations in the group of operations (270).

8. Method to secure data according to one of the previous claims, **characterised in that** the cryptographic algorithm is of type DATA ENCRYPTION STANDARD.

9. Smartcard comprising a microprocessor programmed to implement a cryptographic algorithm executing operations to process data elements (M, M0, M1, M2, M3, K1, K2, K3, K4, K5, R1, R2, R3, R4, R5) to generate encrypted information (C), the method to secure data (M) comprising at least firstly a random bit conversion step (120) to convert at least one of the data elements (K2) associating with said data element (K2), using a logical operator of type EXCLUSIVE OR, a random number and secondly, after this random conversion step, an inverse conversion step (220), such that the encrypted information (C) is unchanged by these conversion steps (120, 220).

10. Computer program product for a smartcard microprocessor, said computer program product comprising a set of instructions which, when it is loaded in the microprocessor, makes the microprocessor execute a cryptographic algorithm involving operations to process data elements (M, M0, M1, M2, M3, K1, K2, K3, K4, K5, R1, R2, R3, R4, R5) to generate encrypted information (C), the operations to process data elements comprising at least firstly a random bit conversion step (120) to convert at least one of the data elements (K2) associating with said data element (K2), using a logical operator of type EXCLUSIVE OR, a random number and secondly, after this random conversion step, an inverse conversion step (220), such that the encrypted information (C) is unchanged by these conversion steps (120, 220).
